# EUROPEAN PATENT SPECIFICATION

(11) **EP 4 425 783 B1**
(45) Date of publication and mention of the grant of the patent: **21.10.2026**
(21) Application number: 24156379.0
(22) Date of filing: 07.02.2024
(51) Int. Cl.: H02N 2/04, H02N 2/02

(54) **MULTI-AXIS NANOPOSITIONER FLEXURE STAGE WITH COARSE AND FINE ADJUSTMENT**
MEHRACHSIGE NANOPOSITIONIER-BIEGEPLATTFORM MIT GROB- UND FEINANPASSUNG
ÉTAGE DE FLEXION DE NANOPOSITIONNEUR À AXES MULTIPLES AVEC AJUSTEMENT GROSSIER ET FIN

(30) Priority: 03.03.2023 US 202363449763 P
(43) Date of publication of application: 04.09.2024
(73) Proprietor: Thorlabs Inc., Newton, New Jersey 07860 (US)
(72) Inventor: DHESE, Keith, Newton (US); GRIMWADE, Dave, Newton (US); ARAUZ, Lina, Newton (US); VIDA, Mate, Newton (US)
(74) Representative: Grättinger Möhring von Poschinger Patentanwälte Partnerschaft mbB

(56) References cited:
- EP-A2- 0 937 961
- US-A1- 2019 032 759
- DIETZEL OLIVER: "Hybrid Nanopositioning Systems with Piezo Actuators", 1 October 2018 (2018-10-01), pages 1 - 6, XP093181897, Retrieved from the Internet <URL:https://www.physikinstrumente.com/fileadmin/user_upload/physik_instrumente/files/WP/PI-WP4014-Hybrid-Nanopositioning-Systems.pdf> [retrieved on 20240704]
- CAYREL M: "E-ELT optomechanics: overview", PROCEEDINGS OF SPIE, IEEE, US, vol. 8444, 13 September 2012 (2012-09-13), pages 84441X - 84441X, XP060027704, ISBN: 978-1-62841-730-2, DOI: 10.1117/12.925175
- YONG Y K ET AL: "Invited Review Article: High-speed flexure-guided nanopositioning: Mechanical design and control issues", REVIEW OF SCIENTIFIC INSTRUMENTS, AMERICAN INSTITUTE OF PHYSICS, 2 HUNTINGTON QUADRANGLE, MELVILLE, NY 11747, vol. 83, no. 12, 1 December 2012 (2012-12-01), pages 121101 - 121101, XP012161758, ISSN: 0034-6748, [retrieved on 20121210], DOI: 10.1063/1.4765048

## Description

### TECHNICAL FIELD

The present disclosure generally relates to positioning stages, and more particularly to a multi-axis nanopositioner flexure stage with coarse and fine adjustment.

### BACKGROUND

There exists a market need for a positioner mechanism with both coarse travel and sufficiently long fine travel for nanopositioning applications. The stage's ability to position objects at the nanometer level can be used in research labs or other industrial applications that demand high levels of performance in precision positioning, for example, fiber coupling, microscopy, life science, biotechnology, etc.

Products available in the marketplace have either only coarse or fine travel, or they have a multi axis flexure and rely on external piezo drive(s) to provide the fine translation(s).

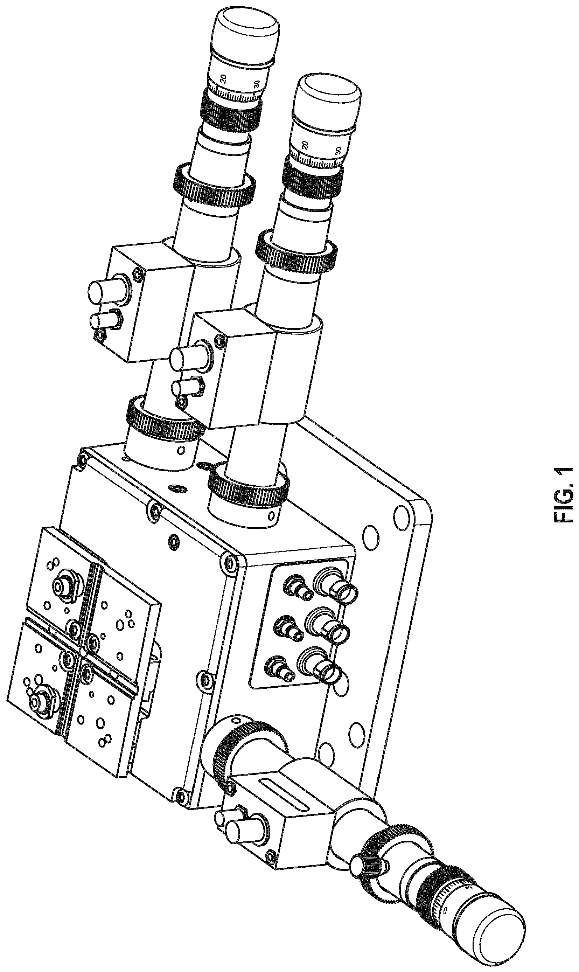

Existing solutions utilize the same flexure mechanism to achieve the motion in 3 axes. However, the piezo stacks are directly coupled to the tip of the actuator, therefore the fine piezo travel range was limited to the maximum displacement of the piezo stack. The maximum displacement is driven by the length and voltage of the piezo stack. The cost of piezo stacks increases greatly with length and fitting a stack with sufficient displacement to achieve the desired fine travel range would not be possible without significantly enlarging the footprint of the product. Moreover, some existing solutions include external piezo actuators. Although adding such external actuators increases the fine travel range of the stage by another 20 µm, it also adds significant cost and footprint to the product. FIG. 1 shows an example of this conventional design with the external piezo actuators attached.

Dietzel Oliver: "Hybrid Nanopositioning Systems with Piezo Actuators," 1 October 2018 (2018-10-01), pages 1 - 6, discloses a piezo actuator positioner with subnanometer accuracy, in which the motor drive screw is suitable for heavy loads and a long travel ranges starting at a few millimeters and going up to one meter. The piezo actuator provides a nominal displacement of approximately 0.1 to 0.15 of the actuator length but nevertheless achieves a positioning accuracy in the subnanometer range with one high-resolution sensor and can therefore compensate for in accuracies of the motor drive.

Cayerl M.: "E-ELT optomechanics: overview," Proceedings of SPIE, IEEE, US, vol. 8444, 13 September 2012 (2012-09-13), pages 84441X-844441X, XP0600277704, DOI: 10.1117/1.925175, ISBN: 978-1-62841-730-2, discloses three position actuators move the segment assembly in piston and tip-tilt. The actuators are required to have 15 mm stroke to reposition the segment to its nominal position compensating for the deflections of the underlying telescope structure. In addition, the actuators need to provide the resolution and accuracy necessary for phasing the primary mirror in the presence of disturbances. These are dominated by the wind across the front surface of the primary mirror and possible vibrations arising from machinery either directly under the segments or transmitted through the structure to the primary segments. For the wind we have assumed 1.6-m/s for the speed across the primary and a von Karman spectrum. The vibrations are simulated by injecting 5- *µ* g/ √ Hz into the structure. This value has been determined from the measured accelerations at the UTs at Paranal and is considered a conservative number.

US 2019/0032759 A1 discloses enhanced method and precision nanopositioning apparatus for implementing enhanced nanopositioning performance is provided. The nanopositioning apparatus includes a vertical linear nanopositioning flexure stage and a horizontal linear nanopositioning flexure stage. The vertical linear nanopositioning flexure stage includes a stage base, a symmetrically configured flexure linear guiding mechanism with precision motion enhancement structure, and a stage carriage. The horizontal linear nanopositioning flexure stage is mounted on the stage carriage of the vertical linear nanopositioning flexure stage, and includes a middle-bar relative position control mechanism to enhance the stiffness of a flexure linear guiding mechanism.

These prior art embodiments, however, still leave room for improvement. In view of the above shortcomings in the existing products, there is a long-felt need for a multi-axis flexure stage capable of both coarse and fine travel in all axes, within a relatively small footprint. According to various aspects disclosed herein, the invention is generally directed to a multi-axis positioner as recited in independent claims 1 and 2. Further embodiments are recited in the dependent claims.

### SUMMARY

A mechanical amplifier with a lever mechanism is proposed in the present invention to overcome above issues and allow for sufficient fine travel range. For example, in one embodiment, over 80 µm of fine travel can be achieved. Furthermore, increasing the footprint of the embodiment would result in even larger fine travel of over 100 µm. The amplifier can utilize any small actuator capable of fine resolution, such as a piezo actuator, voice coil, etc.

The present invention proposes a multi-axis flexure stage capable of both coarse and fine travel in all axes. The stage comprises a coarse and fine travel actuation mechanism coupled together and a flexure mechanism that transmits the actuation to the moving world. The coarse travel can be achieved by a manual or motorized actuator, whereas the fine travel is provided by an alternative actuator solution capable of fine resolution with a mechanical amplifier. An embodiment of the present invention can be used in both an open and closed loop feedback arrangement. According to one embodiment, the coupling of a mechanical amplifier to the coarse travel drive achieves a greatly improved fine travel range compared to the previous solution in the same product volume.

An embodiment of the present invention provides a multi-axis positioner including: a base; a platform; and an arrangement of a plurality of actuators mounted onto the base; wherein the arrangement of the plurality of actuators are coupled to the platform via a plurality of monolithic flexures such that the arrangement of the plurality of actuators moves the platform relative to the base in a plurality of axes of motion; wherein each of the plurality of actuators includes a coarse travel actuation mechanism coupled directly with a fine travel actuation mechanism in a corresponding axis of motion of the arrangement of the plurality of actuators; wherein the fine travel actuation mechanism has a higher travel resolution than that of the coarse travel actuation mechanism.

### BRIEF DESCRIPTION OF THE DRAWINGS

FIG. 1 is a diagram of an existing positioner design with external piezo actuators attached.
FIG. 2 is a block diagram of a positioner according to one embodiment of the present invention.
FIG. 3 shows the components of a positioner according to one embodiment of the present invention.
FIG. 4 is a Y-axis view of a positioner according to one embodiment of the present invention.
FIG. 5A shows a piezo element in a relaxed state and FIG. 5B shows the piezo element in an expanded state according to one embodiment of the present invention.
FIG. 6 shows the respective graphs of drive voltage vs. stage travel for an existing positioner and a positioner according to one embodiment of the present invention.
FIG. 7A shows a piezo drive mechanism in an existing positioner and FIG. 7B shows a piezo amplifier in a positioner according to one embodiment of the present invention.
FIG. 8 shows a piezo amplifier in a 6-axis stage according to one embodiment of the present invention.

### DETAILED DESCRIPTION

The description of illustrative examples according to existing positioners and embodiments of positioners according to the present invention are intended to be read in connection with the accompanying drawings, which are to be considered part of the entire written description. In the description of examples and embodiments disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the present invention are illustrated by reference to the embodiments. The scope of the present invention being defined by the claims appended hereto.

This disclosure describes the best mode or modes of practicing the disclosure as presently contemplated. This description is not intended to be understood in a limiting sense, but provides an example of the disclosure presented solely for illustrative purposes by reference to the accompanying drawings to advise one of ordinary skill in the art of the advantages and construction of the disclosure. In the various views of the drawings, like reference characters designate like or similar parts.

It is important to note that the embodiments disclosed are only examples of the many advantageous uses of the present invention herein.

The coarse travel mechanism can be any suitable actuator that provides the required travel range and suitable for a specific operation environment. For example, the coarse travel mechanism can be a manual operated micrometer adjustment screw, or a motorized actuator, etc.

The fine travel mechanism can be any suitable actuator that provides the required travel range and the required fine travel resolution. In one particular embodiment described in the present invention according to claim 1, fine travel mechanism uses a compact piezo stack, whose dimensions can be varied by an application of a voltage.

Note that in a traditional piezo actuator design, a large number of piezo elements are stacked together in order to achieve a required long travel range. However, this would increase the required footprint of the piezo actuator.

As mentioned before, there is a great interest in the industry to achieve a sufficiently long fine, precise travel, maintaining the same amount of coarse travel in each axis of travel and the same overall product footprint. If the footprint of the product is increased, even larger fine displacement can be achieved.

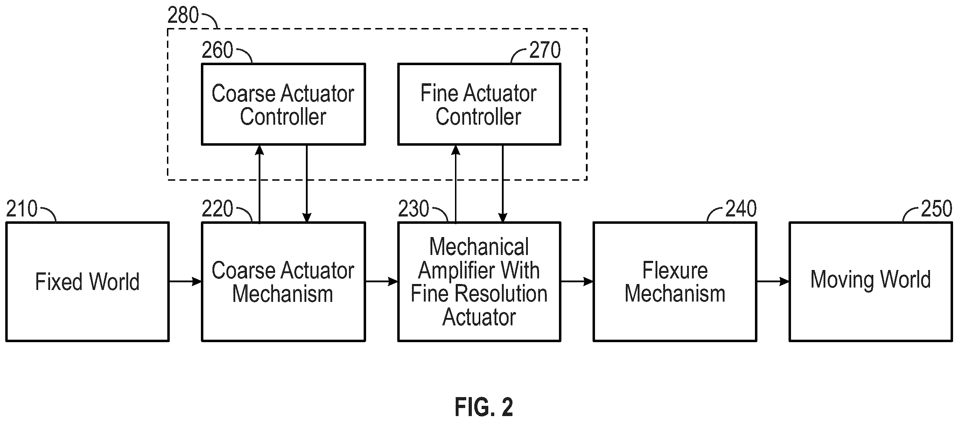

FIG. 2 is a block diagram of components of a multi-axis positioner according to an embodiment of the present invention. The fixed world 210 is generally a base that is fixed in a setup. The base may have mounts configured for receiving a plurality of actuators. The moving world 250 is generally a platform that has one or more surfaces for attaching a sample or device to be positioned. The actuator includes a coarse travel actuation mechanism 220 coupled directly a fine travel actuation mechanism 230. The flexure mechanisms 240 are configured to translate respective travels from the actuators to the platform (moving world). In one embodiment, the fine travel actuation mechanism is mechanical amplifier which provides long and precision travel actuations.

In one embodiment, the multi-axis positioner includes a feedback mechanism. The feedback can be used both in an open and closed loop arrangement. The closed loop feedback mechanism can be the following: capacitive feedback, strain gauge mechanism, optical feedback, magnetic feedback, or electrical resistance feedback. In one embodiment, one or more of the fine and coarse travel mechanisms can be controlled by their respective controllers 270, 260, or by a single controller 280 having separate fine and coarse control functions. The controller can be integrated into the device or can be a standalone unit. Furthermore, with the feedback mechanism, the controller can control one or more of the fine and coarse travel mechanisms based on the feedback in real time.

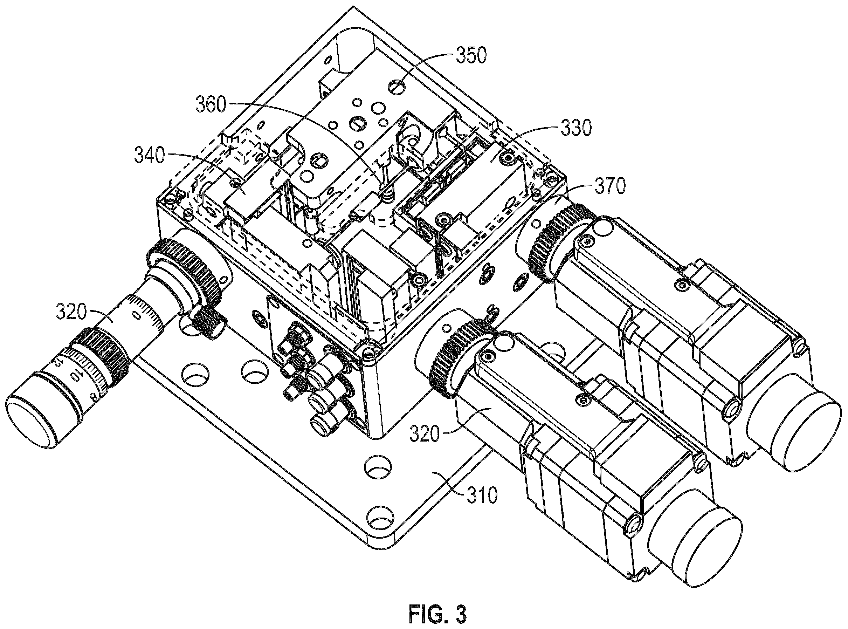

FIG. 3 is a 3-axis arrangement for a positioner according to one example embodiment. The positioner includes a base plate 310 equipped with mounting bushes 370 to which the external actuators 320 are attached that provides the coarse movement. The coarse actuators can be a manual driver or a stepper motor for coarse position adjustment. Also shown are the internal levers 330 on which the piezo stacks are mounted. The piezo fine travel actuator 340 provides the extended fine travel for accurate position adjustment. The monolithic titanium flexures 360 connect the moving world 350 to the levers and allow movement of the moving world in 3 axes. In this embodiment the position feedback is achieved by a strain gauge, but in other embodiments it can be extended to any other feedback mechanism mentioned above, e.g., a potentiometer as an electrical resistance feedback mechanism. The unit has an external controller capable of both open and closed loop operation, but in other embodiments, the controller may be integrated into the positioner.

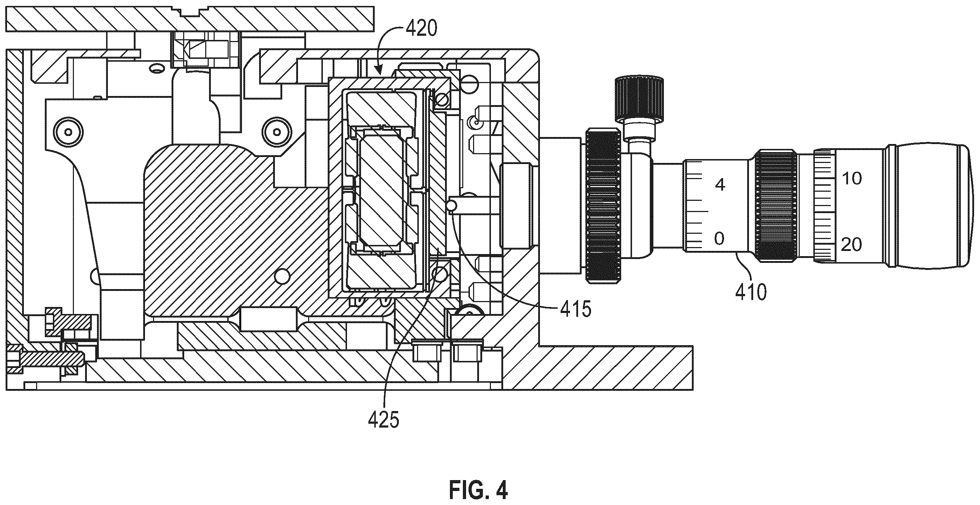

In one embodiment of the present invention, FIG. 4 shows how the coarse and fine travel is achieved on the Y-axis. The coarse actuator tip 410 acts directly on the lever of the fine travel piezo amplifier 420, which is attached rigidly to the Y-axis lever 425. Displacement of coarse travel actuator tip 415 translates the moving world in the Y-direction. The coarse actuator 410 being either a micrometer for manual movement or a motorized actuator (brushed or brushless DC motor, stepper motor, inertial drive, etc.) for automated movement. When the piezo stack is energized, the amplifier expands, further translating the moving world in the Y-direction giving fine resolution travel control.

Within the same embodiment, the same principle is also applied to the other axes of travel, each axis having a similar coarse and fine travel mechanism. In one embodiment, the combined coarse and fine travel in the X, Y and Z directions is transferred to the moving world by 6 monolithic flexures (2 flexures per axis for better stability) thereby facilitating movement in all 3 axes simultaneously.

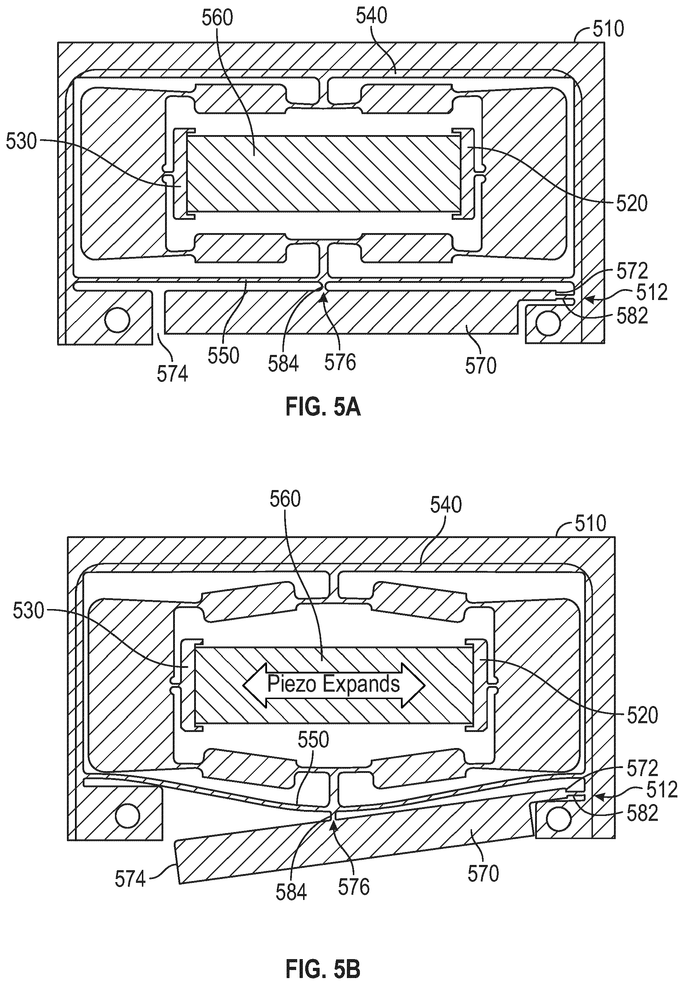

The working principle of the amplifier can be seen in FIGS. 5A and 5B in one embodiment of the present invention. Before energizing, the mechanism is at a neutral state as shown in FIG. 5A. As voltage is applied on the piezo stack, it expands, and the mechanism is deformed as shown on FIG. 5B.

In the present embodiment of the present invention of FIGS. 5A and 5B, the fine travel actuation mechanism includes a flexure frame with holes for mounting. The flexure frame 510 has various parts linked by flex hinges. In particular, there are two side walls 520, 530 that are coupled to respective two ends of a piezo stack 560. When the piezo stack expands/contracts, it pushes/pulls the sidewalls 520, 530. Through the flex hinges, the horizontal movement of the side walls causes a corresponding vertical movement by the top and bottom walls 540, 550. The rigid frame above the top wall limits the movement of the top wall and causes the vertical movement to largely manifest in the movement of the bottom wall 550. The mechanism also includes a lever bar 570 having a first end 572 and a second end 574. The first end 572 of the lever bar is linked to a fixed point 512 in the flexure frame via a flex hinge 582. This fixed point serves as a fulcrum of the lever. The bottom wall is coupled to the lever at a location 576 between the two ends of the lever bar via a flex hinge 584. Because a first distance between the first end and the coupled location is shorter than a second distance between the first end and the second end, when the bottom wall pushes/pulls the lever bar at the coupled location, the second end makes a corresponding vertical movement with an amplification factor equal to the ratio of the second distance to the first distance.

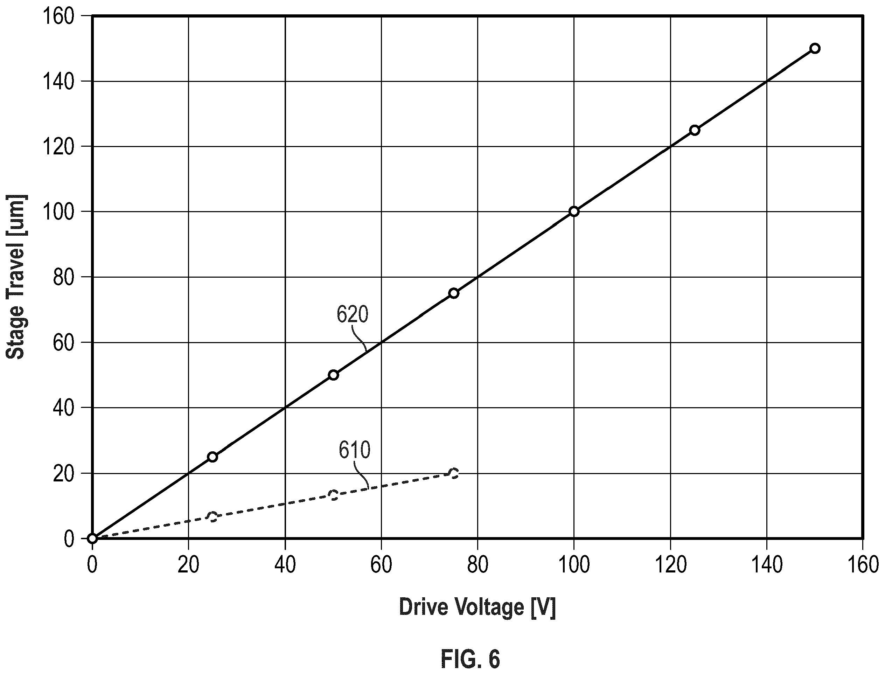

Because of the use of a mechanical amplifier according to an embodiment of the present invention, a large fine travel range can be realized. FIG. 6 shows a graph of drive voltage vs. stage travel for an existing positioner in conjunction with a graph of drive voltage vs. stage travel for a positioner according to one embodiment of the present invention. It can be seen from the plot 610 of the existing positioner and the plot 620 of the positioner according to the one embodiment of the present invention that the positioner according to the one embodiment has a much larger fine travel range than the existing positioner.

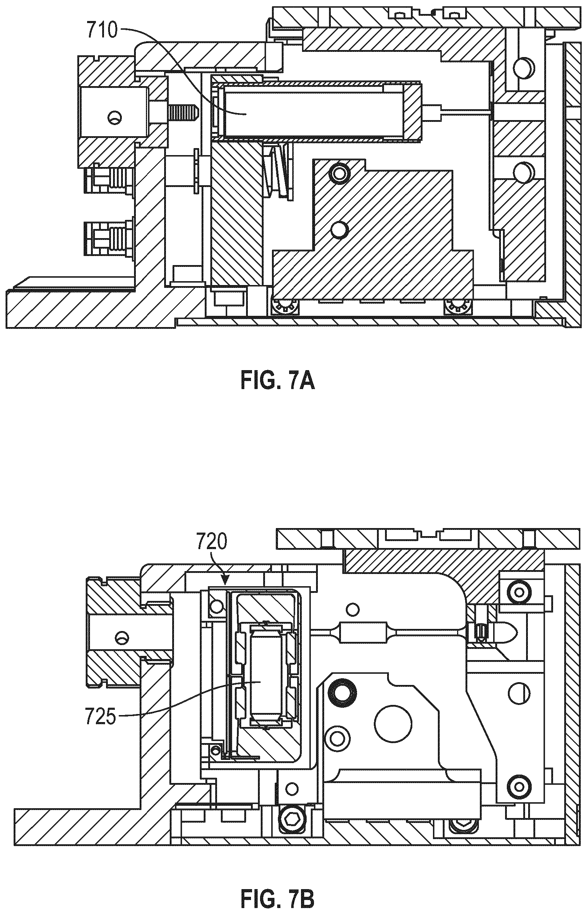

FIGS. 7A and 7B further illustrate the unique advantage of an embodiment of the present invention. FIG. 7A shows the piezo stack arrangement of an existing positioner. The fine movement of the stage is realized by the direct expansion/contraction of the piezo stack 710. However, in order to provide a desired long travel range, a large number of piezo elements are needed to achieve the required cumulated range, and thus results in a large footprint for the device. In contrast, FIG. 7B shows a smaller piezo stack arrangement according to an embodiment of the present invention. Because of the mechanical amplifier 720 employed in an embodiment, fewer piezo elements 725 are needed to provide the same or longer travel range than the existing design. Because of fewer piezo elements and the orientation of the stack in an embodiment, the footprint of the positioner is much smaller and compact than existing positioner.

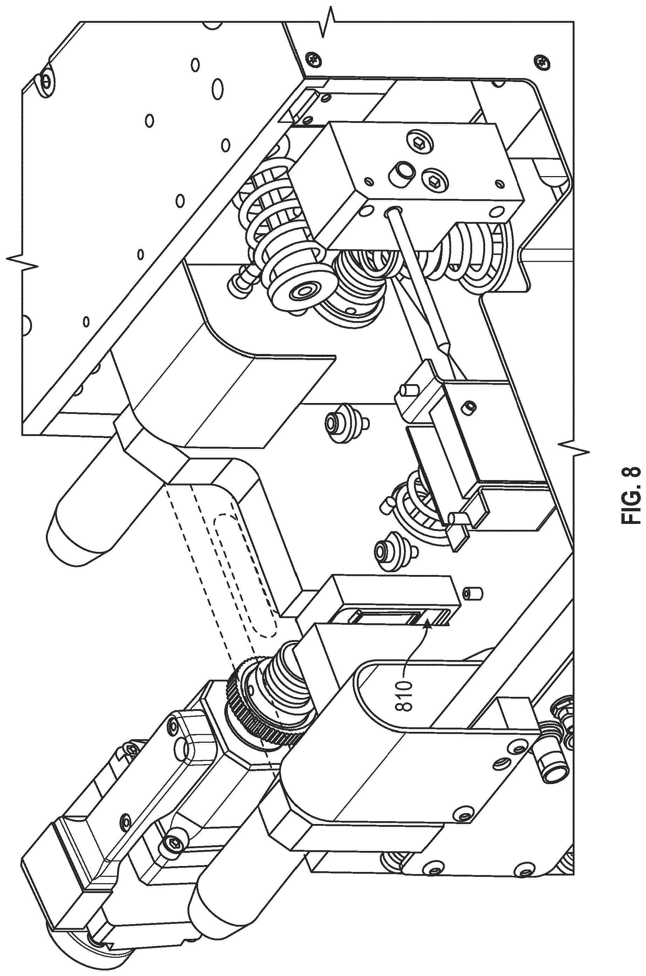

It is worth noting that the concept of coupling the fine and coarse travel and utilizing the fine travel amplification method described above it is not limited to a particular 3-axis embodiment, and it can be extended to any multi-axis arrangements. FIG. 8 shows the piezo amplifier 810 attached to the lever of the X-axis of a 6-axis stage. The working principle of the coupled fine and coarse translation in this design is the same as in the 3-axis embodiment. The micrometer screw actuator provides the coarse translation, and this coarse actuator is directly attached to the piezo amplifier. The piezo amplifier mechanism provides the fine translation in the axis of travel. Furthermore, the concept can be implemented not only in multiple axes of translation, but also rotations, e.g., roll, pitch and yaw. A similar amplified actuator can be used to create rotations with both coarse movement as well as fine adjustment.

While the present disclosure describes at some length and with some particularity with respect to the several described embodiments, the scope of the present invention is only defined by the appended claims.

## Claims

1. A multi-axis positioner comprising:
a base (310);
a platform (350) movable relative to the base (310); and
an arrangement of a plurality of actuators mounted onto the base (310);
wherein the arrangement of the plurality of actuators are coupled to the platform (350) via a plurality of monolithic flexures (360) such that the arrangement of the plurality of actuators moves the platform (350) relative to the base (310) in a plurality of axes of motion;
wherein each of the plurality of actuators comprises a coarse travel actuation mechanism (320) coupled directly with a fine travel actuation mechanism (340) in a corresponding axis of motion of the arrangement of the plurality of actuators;
wherein the fine travel actuation mechanism (340) has a higher travel resolution than that of the coarse travel actuation mechanism (320);
wherein the fine travel actuation mechanism comprises:
a flexure frame (510) having a first side wall (520), a second side wall (530), a top wall (540), a bottom wall (550), and a lever bar (570); and
a piezo stack (560), a first end and a second end of the piezo stack being coupled to the first side wall and second side wall respectively;
wherein the first side wall (520), second side wall (530), top wall (540) and bottom wall (550) are linked by flex hinges such that an expansion or contraction of the piezo stack (560) in a horizontal direction generates a corresponding expansion or contraction of the bottom wall (550) in a vertical direction;
wherein the lever bar (570) has a first end (572) and a second end (574), the first end of the lever bar being linked by a first flex hinge (582) to a fixed location (512) in the flexure frame (510), and a first location (576) of the lever bar (570) is linked by a second flex hinge (584) to a corresponding location of the bottom wall (550), and
wherein a distance between the first end (572) and first location (576) of the lever bar (570) is shorter than a distance between the first end (572) and second end (574) of the lever bar (570), such that the expansion or contraction of the bottom wall is amplified in the second end (574) via a lever action.

2. A multi-axis positioner comprising:
a base (310);
a platform (350) movable relative to the base (310); and
an arrangement of a plurality of actuators mounted onto the base (310);
wherein the arrangement of the plurality of actuators are coupled to the platform (350) via a plurality of monolithic flexures (360) such that the arrangement of the plurality of actuators moves the platform (350) relative to the base (310) in a plurality of axes of motion;
wherein each of the plurality of actuators comprises a coarse travel actuation mechanism (320) coupled directly with a fine travel actuation mechanism (340) in a corresponding axis of motion of the arrangement of the plurality of actuators;
wherein the fine travel actuation mechanism (340) has a higher travel resolution than that of the coarse travel actuation mechanism (320);
wherein the fine travel actuation mechanism comprises:
a flexure frame (510) having a first side wall (520), a second side wall (530), a top wall (540), a bottom wall (550), and a lever bar (570); and
a voice coil actuator, a first end and a second end of the voice coil actuator being coupled to the first side wall and second side wall respectively;
wherein the first side wall (520), second side wall (530), top wall (540) and bottom wall (550) are linked by flex hinges such that an expansion or contraction of the voice coil actuator in a horizontal direction generates a corresponding expansion or contraction of the bottom wall (550) in a vertical direction;
wherein the lever bar (570) has a first end (572) and a second end (574), the first end of the lever bar being linked by a first flex hinge (582) to a fixed location (512) in the flexure frame (510), and a first location (576) of the lever bar (570) is linked by a second flex hinge (584) to a corresponding location of the bottom wall (550), and
wherein a distance between the first end (572) and first location (576) of the lever bar (570) is shorter than a distance between the first end (572) and second end (574) of the lever bar (570), such that the expansion or contraction of the bottom wall is amplified in the second end (574) via a lever action.

3. The multi-axis positioner of claim 1, wherein the top wall (540) is attached to a rigid frame which limits the movement of the top wall (540) and causes a vertical movement resulted from the expansion or contraction of the piezo stack (560) to largely manifest in a movement of the bottom wall (550).

4. The multi-axis positioner of claim 2, wherein the top wall (540) is attached to a rigid frame which limits the movement of the top wall (540) and causes a vertical movement resulted from the expansion or contraction of the voice coil actuator to largely manifest in a movement of the bottom wall (550).

5. The multi-axis positioner of claim 1 or claim 2, wherein two monolithic flexures are used for each of the axes of motion.

6. The multi-axis positioner of claim 1 or claim 2, wherein the coarse travel actuation mechanism comprises a motorized actuator.

7. The multi-axis positioner of claim 1 or claim 2, wherein the coarse travel actuation mechanism comprises a micrometer adjustment screw.

8. The multi-axis positioner of claim 1 or claim 2, further comprising a controller unit configured to control at least one of the coarse travel actuation mechanism and fine travel actuation mechanism.

9. The multi-axis positioner of claim 8, further comprising a feedback mechanism configured to provide position feedback to the controller unit.

10. The multi-axis positioner of claim 9, wherein the feedback mechanism is a closed loop feedback mechanism.

11. The multi-axis positioner of claim 10, wherein the closed loop feedback mechanism is capacitive feedback, strain gauge feedback, optical feedback, magnetic feedback, or electrical resistance feedback.

12. The multi-axis positioner of claim 8, wherein the controller unit is integrated into the positioner, or wherein the controller unit is a standalone unit external to the positioner.

13. The multi-axis positioner of claim 1 or claim 2, wherein the plurality of axes of motion comprises X, Y and Z-directions.

14. The multi-axis positioner of claim 1 or claim 2, wherein the plurality of axes of motion comprises roll, pitch and yaw.

15. The multi-axis positioner of claim 1 or claim 2, wherein the plurality of axes of motion comprises six axes of motion.

## Patentansprüche

1. Mehrachsiger Positionierer, umfassend:
eine Basis (310),
eine Plattform (350), die relativ zu der Basis (310) beweglich ist, und
eine Anordnung einer Mehrzahl von Aktuatoren, die auf der Basis (310) montiert sind,
wobei die Anordnung der Mehrzahl von Aktuatoren mit der Plattform (350) über eine Mehrzahl von monolithischen Biegungen (360) gekoppelt ist, so dass die Anordnung der Mehrzahl von Aktuatoren die Plattform (350) relativ zu der Basis (310) in einer Mehrzahl von Bewegungsachsen bewegt,
wobei jeder der Mehrzahl von Aktuatoren einen Grobbewegungsbetätigungsmechanismus (320) umfasst, der direkt mit einem Feinbewegungsbetätigungsmechanismus (340) in einer entsprechenden Bewegungsachse der Anordnung der Mehrzahl von Aktuatoren gekoppelt ist,
wobei der Feinbewegungsbetätigungsmechanismus (340) eine höhere Bewegungsauflösung als die des Grobbewegungsbetätigungsmechanismus (320) aufweist,
wobei der Feinbewegungsbetätigungsmechanismus umfasst:
einen Biegerahmen (510) mit einer ersten Seitenwand (520), einer zweiten Seitenwand (530), einer oberen Wand (540), einer unteren Wand (550) und einer Hebelstange (570) und
einen Piezostapel (560), wobei ein erstes Ende und ein zweites Ende des Piezostapels mit der ersten Seitenwand bzw. der zweiten Seitenwand gekoppelt sind,
wobei die erste Seitenwand (520), die zweite Seitenwand (530), die obere Wand (540) und die untere Wand (550) durch Biegescharniere derart verbunden sind, dass eine Ausdehnung oder Kontraktion des Piezostapels (560) in einer horizontalen Richtung eine entsprechende Ausdehnung oder Kontraktion der unteren Wand (550) in einer vertikalen Richtung erzeugt,
wobei die Hebelstange (570) ein erstes Ende (572) und ein zweites Ende (574) aufweist, wobei das erste Ende der Hebelstange durch ein erstes Biegescharnier (582) mit einer festen Stelle (512) in dem Biegerahmen (510) verbunden ist, und wobei eine erste Stelle (576) der Hebelstange (570) durch ein zweites Biegescharnier (584) mit einer entsprechenden Stelle der unteren Wand (550) verbunden ist, und
wobei ein Abstand zwischen dem ersten Ende (572) und der ersten Stelle (576) der Hebelstange (570) kürzer ist als ein Abstand zwischen dem ersten Ende (572) und dem zweiten Ende (574) der Hebelstange (570), so dass die Ausdehnung oder Kontraktion der unteren Wand in dem zweiten Ende (574) über eine Hebelwirkung verstärkt wird.

2. Mehrachsiger Positionierer, umfassend:
eine Basis (310),
eine Plattform (350), die relativ zu der Basis (310) beweglich ist, und
eine Anordnung einer Mehrzahl von Aktuatoren, die auf der Basis (310) montiert sind,
wobei die Anordnung der Mehrzahl von Aktuatoren mit der Plattform (350) über eine Mehrzahl von monolithischen Biegungen (360) gekoppelt ist, so dass die Anordnung der Mehrzahl von Aktuatoren die Plattform (350) relativ zu der Basis (310) in einer Mehrzahl von Bewegungsachsen bewegt,
wobei jeder der Mehrzahl von Aktuatoren einen Grobbewegungsbetätigungsmechanismus (320) umfasst, der direkt mit einem Feinbewegungsbetätigungsmechanismus (340) in einer entsprechenden Bewegungsachse der Anordnung der Mehrzahl von Aktuatoren gekoppelt ist,
wobei der Feinbewegungsbetätigungsmechanismus (340) eine höhere Bewegungsauflösung als die des Grobbewegungsbetätigungsmechanismus (320) aufweist,
wobei der Feinbewegungsbetätigungsmechanismus umfasst:
einen Biegerahmen (510) mit einer ersten Seitenwand (520), einer zweiten Seitenwand (530), einer oberen Wand (540), einer unteren Wand (550) und einer Hebelstange (570), und
einen Schwingspulenaktuator, wobei ein erstes Ende und ein zweites Ende des Schwingspulenaktuators mit der ersten Seitenwand bzw. der zweiten Seitenwand gekoppelt sind,
wobei die erste Seitenwand (520), die zweite Seitenwand (530), die obere Wand (540) und die untere Wand (550) durch Biegescharniere derart verbunden sind, dass eine Ausdehnung oder Kontraktion des Schwingspulenaktuators in einer horizontalen Richtung eine entsprechende Ausdehnung oder Kontraktion der unteren Wand (550) in einer vertikalen Richtung erzeugt,
wobei die Hebelstange (570) ein erstes Ende (572) und ein zweites Ende (574) aufweist, wobei das erste Ende der Hebelstange durch ein erstes Biegescharnier (582) mit einer festen Stelle (512) in dem Biegerahmen (510) verbunden ist, und wobei eine erste Stelle (576) der Hebelstange (570) durch ein zweites Biegescharnier (584) mit einer entsprechenden Stelle der unteren Wand (550) verbunden ist, und
wobei ein Abstand zwischen dem ersten Ende (572) und der ersten Stelle (576) der Hebelstange (570) kürzer ist als ein Abstand zwischen dem ersten Ende (572) und dem zweiten Ende (574) der Hebelstange (570), so dass die Ausdehnung oder Kontraktion der unteren Wand in dem zweiten Ende (574) über eine Hebelwirkung verstärkt wird.

3. Mehrachsiger Positionierer nach Anspruch 1, wobei die obere Wand (540) an einem starren Rahmen befestigt ist, der die Bewegung der oberen Wand (540) begrenzt und bewirkt, dass sich eine vertikale Bewegung, die aus der Ausdehnung oder Kontraktion des Piezostapels (560) resultiert, größtenteils in einer Bewegung der unteren Wand (550) manifestiert.

4. Mehrachsiger Positionierer nach Anspruch 2, wobei die obere Wand (540) an einem starren Rahmen befestigt ist, der die Bewegung der oberen Wand (540) begrenzt und bewirkt, dass sich eine vertikale Bewegung, die aus der Ausdehnung oder Kontraktion des Schwingspulenaktuators resultiert, größtenteils in einer Bewegung der unteren Wand (550) manifestiert.

5. Mehrachsiger Positionierer nach Anspruch 1 oder Anspruch 2, wobei zwei monolithische Biegungen für jede der Bewegungsachsen verwendet werden.

6. Mehrachsiger Positionierer nach Anspruch 1 oder Anspruch 2, wobei der Grobbewegungsbetätigungsmechanismus einen motorisierten Aktuator umfasst.

7. Mehrachsiger Positionierer nach Anspruch 1 oder Anspruch 2, wobei der Grobbewegungsbetätigungsmechanismus eine Mikrometereinstellschraube umfasst.

8. Mehrachsiger Positionierer nach Anspruch 1 oder Anspruch 2, der ferner eine Steuereinheit umfasst, die ausgebildet ist, um den Grobbewegungsbetätigungsmechanismus und/oder den Feinbewegungsbetätigungsmechanismus zu steuern.

9. Mehrachsiger Positionierer nach Anspruch 8, der ferner einen Rückkopplungsmechanismus umfasst, der ausgebildet ist, um der Steuereinheit eine Positionsrückkopplung bereitzustellen.

10. Mehrachsiger Positionierer nach Anspruch 9, wobei der Rückkopplungsmechanismus ein Rückkopplungsmechanismus mit geschlossener Schleife ist.

11. Mehrachsiger Positionierer nach Anspruch 10, wobei der Rückkopplungsmechanismus mit geschlossener Schleife eine kapazitive Rückkopplung, eine Dehnungsmessstreifenrückkopplung, eine optische Rückkopplung, eine magnetische Rückkopplung oder eine elektrische Widerstandsrückkopplung ist.

12. Mehrachsiger Positionierer nach Anspruch 8, wobei die Steuereinheit in den Positionierer integriert ist oder wobei die Steuereinheit eine eigenständige Einheit außerhalb des Positionierers ist.

13. Mehrachsiger Positionierer nach Anspruch 1 oder Anspruch 2, wobei die Mehrzahl von Bewegungsachsen X-, Y- und Z-Richtungen umfasst.

14. Mehrachsiger Positionierer nach Anspruch 1 oder Anspruch 2, wobei die Mehrzahl von Bewegungsachsen Rollen, Nicken und Gieren umfasst.

15. Mehrachsiger Positionierer nach Anspruch 1 oder Anspruch 2, wobei die Mehrzahl von Bewegungsachsen sechs Bewegungsachsen umfasst.

## Revendications

1. Positionneur multi-axes comprenant :
une base (310) ;
une plateforme (350) mobile par rapport à la base (310) ; et
un agencement d'une pluralité d'actionneurs montés sur la base (310) ;
dans lequel l'agencement de la pluralité d'actionneurs est couplé à la plateforme (350) par l'intermédiaire d'une pluralité d'éléments flexibles monolithiques (360) de telle sorte que l'agencement de la pluralité d'actionneurs déplace la plateforme (350) par rapport à la base (310) selon une pluralité d'axes de mouvement ;
dans lequel chacun de la pluralité d'actionneurs comprend un mécanisme d'actionnement à course grossière (320) couplé directement à un mécanisme d'actionnement à course fine (340) selon un axe de mouvement correspondant de l'agencement de la pluralité d'actionneurs ;
dans lequel le mécanisme d'actionnement à course fine (340) possède une résolution de déplacement supérieure à celle du mécanisme d'actionnement à course grossière (320) ;
dans lequel le mécanisme d'actionnement à course fine comprend :
un cadre flexible (510) comportant une première paroi latérale (520), une deuxième paroi latérale (530), une paroi supérieure (540), une paroi inférieure (550) et une barre de levier (570) ; et
une pile piézoélectrique (560), une première extrémité et une deuxième extrémité de la pile piézoélectrique étant couplées respectivement à la première paroi latérale et à la deuxième paroi latérale ;
dans lequel la première paroi latérale (520), la deuxième paroi latérale (530), la paroi supérieure (540) et la paroi inférieure (550) sont reliées par des articulations flexibles de telle sorte qu'une expansion ou une contraction de la pile piézoélectrique (560) dans une direction horizontale génère une expansion ou une contraction correspondante de la paroi inférieure (550) dans une direction verticale ;
dans lequel la barre de levier (570) présente une première extrémité (572) et une deuxième extrémité (574), la première extrémité de la barre de levier étant reliée par une première articulation flexible (582) à un emplacement fixe (512) dans le cadre flexible (510) et un premier emplacement (576) de la barre de levier (570) est relié par une deuxième articulation flexible (584) à un emplacement correspondant de la paroi inférieure (550) et
dans lequel une distance entre la première extrémité (572) et le premier emplacement (576) de la barre de levier (570) est inférieure à une distance entre la première extrémité (572) et la deuxième extrémité (574) de la barre de levier (570), de telle sorte que la dilatation ou la contraction de la paroi inférieure soit amplifiée au niveau de la deuxième extrémité (574) par un effet de levier.

2. Positionneur multi-axes comprenant :
une base (310) ;
une plateforme (350) mobile par rapport à la base (310) ; et
un agencement d'une pluralité d'actionneurs montés sur la base (310) ;
dans lequel l'agencement de la pluralité d'actionneurs est couplé à la plateforme (350) par l'intermédiaire d'une pluralité d'éléments flexibles monolithiques (360) de telle sorte que l'agencement de la pluralité d'actionneurs déplace la plateforme (350) par rapport à la base (310) selon une pluralité d'axes de mouvement ;
dans lequel chacun de la pluralité d'actionneurs comprend un mécanisme d'actionnement à course grossière (320) couplé directement à un mécanisme d'actionnement à course fine (340) selon un axe de mouvement correspondant de l'agencement de la pluralité d'actionneurs ;
dans lequel le mécanisme d'actionnement à course fine (340) présente une résolution de déplacement supérieure à celle du mécanisme d'actionnement à course grossière (320) ;
dans lequel le mécanisme d'actionnement à course fine comprend :
un cadre flexible (510) comportant une première paroi latérale (520), une deuxième paroi latérale (530), une paroi supérieure (540), une paroi inférieure (550) et une barre de levier (570) ; et
un actionneur à bobine mobile, une première extrémité et une deuxième extrémité de l'actionneur à bobine mobile étant couplées respectivement à la première paroi latérale et à la deuxième paroi latérale ;
dans lequel la première paroi latérale (520), la deuxième paroi latérale (530), la paroi supérieure (540) et la paroi inférieure (550) sont reliées par des articulations flexibles de telle sorte qu'une expansion ou une contraction de l'actionneur à bobine mobile dans une direction horizontale génère une expansion ou une contraction correspondante de la paroi inférieure (550) dans une direction verticale ;
dans lequel la barre de levier (570) présente une première extrémité (572) et une deuxième extrémité (574), la première extrémité de la barre de levier étant reliée par une première articulation flexible (582) à un emplacement fixe (512) du cadre flexible (510) et un premier emplacement (576) de la barre de levier (570) est relié par une deuxième articulation flexible (584) à un emplacement correspondant de la paroi inférieure (550) et
dans lequel une distance entre la première extrémité (572) et le premier emplacement (576) de la barre de levier (570) est inférieure à une distance entre la première extrémité (572) et la deuxième extrémité (574) de la barre de levier (570), de telle sorte que l'expansion ou la contraction de la paroi inférieure soit amplifiée au niveau de la deuxième extrémité (574) par un effet de levier.

3. Positionneur multi-axes selon la revendication 1, dans lequel la paroi supérieure (540) est fixée à un cadre rigide qui limite le mouvement de la paroi supérieure (540) et fait en sorte qu'un mouvement vertical résultant de l'expansion ou de la contraction de la pile piézoélectrique (560) se manifeste principalement par un mouvement de la paroi inférieure (550).

4. Positionneur multi-axes selon la revendication 2, dans lequel la paroi supérieure (540) est fixée à un cadre rigide qui limite le mouvement de la paroi supérieure (540) et fait en sorte qu'un mouvement vertical résultant de l'expansion ou de la contraction de l'actionneur à bobine mobilese manifeste principalement par un mouvement de la paroi inférieure (550).

5. Positionneur multi-axes selon la revendication 1 ou la revendication 2, dans lequel deux éléments de flexion monolithiques sont utilisés pour chacun des axes de mouvement.

6. Positionneur multi-axes selon la revendication 1 ou la revendication 2, dans lequel le mécanisme d'actionnement à course grossière comprend un actionneur motorisé.

7. Positionneur multi-axes selon la revendication 1 ou la revendication 2, dans lequel le mécanisme d'actionnement à course grossière comprend une vis de réglage micrométrique.

8. Positionneur multi-axes selon la revendication 1 ou la revendication 2, comprenant en outre une unité de commande configurée pour commander au moins un parmi le mécanisme d'actionnement à course grossière et le mécanisme d'actionnement à course fine.

9. Positionneur multi-axes selon la revendication 8, comprenant en outre un mécanisme de rétroaction configuré pour fournir une rétroaction de position à l'unité de commande.

10. Positionneur multi-axes selon la revendication 9, dans lequel le mécanisme de rétroaction est un mécanisme de rétroaction en boucle fermée.

11. Positionneur multi-axes selon la revendication 10, dans lequel le mécanisme de rétroaction en boucle fermée est une rétroaction capacitive, une rétroaction par jauge de contrainte, une rétroaction optique, une rétroaction magnétique ou une rétroaction par résistance électrique.

12. Positionneur multi-axes selon la revendication 8, dans lequel l'unité de commande est intégrée au positionneur ou l'unité de commande est une unité autonome externe au dispositif de positionnement.

13. Positionneur multi-axes selon la revendication 1 ou la revendication 2, dans lequel la pluralité d'axes de mouvement comprend les directions X, Y et Z.

14. Positionneur multi-axes selon la revendication 1 ou la revendication 2, dans lequel la pluralité d'axes de mouvement comprend le roulis, le tangage et le lacet.

15. Positionneur multi-axes selon la revendication 1 ou la revendication 2, dans lequel la pluralité d'axes de mouvement comprend six axes de mouvement.
